# EUROPEAN PATENT SPECIFICATION

(11) **EP 2 178 394 B1**
(45) Date of publication and mention of the grant of the patent: **18.10.2017**
(21) Application number: 08796749.3
(22) Date of filing: 29.07.2008
(51) Int. Cl.: A23L 29/30, A23L 7/10, A23L 7/104, A23L 7/143

(54) **Method for preparing a sweetener from oats**
Herstellungsverfahren für Süssstoffe aus Hafer
Méthode pour prépare un edulcorant dérivé de l'avoine

(30) Priority: 15.08.2007 US 839428
(43) Date of publication of application: 28.04.2010
(73) Proprietor: The Quaker Oats Company, Chicago, IL 60661 (US)
(72) Inventor: HANSA, James, D., Algonquin, IL 60102 (US); MCARDLE, Richard, N., Palatine, IL 60067 (US)
(74) Representative: Jenkins, Peter David
(86) International application number: PCT/US2008/071418
(87) International publication number: WO 2009/023431

(56) References cited:
- WO-A-00/30457
- WO-A-89/02705
- WO-A-03/075683
- US-A- 4 247 636
- US-A- 4 834 988
- US-A- 4 859 474
- US-A- 5 631 032
- US-B1- 6 190 708

## Description

This application claims priority to U.S. Application Serial No. 11/839,428, filed August 15, 2007.

### FIELD OF THE INVENTION

relates to a method of deriving a sweetener from oats.

### BACKGROUND

Oatmeal has for many years been a staple of the human diet due to its health benefits. For example, numerous studies have shown that eating oatmeal on a daily basis can help lower blood cholesterol, reduce risk of heart disease, promote healthy blood flow, as well as maintain healthy blood pressure levels. Additionally, oatmeal has high content of complex carbohydrates and fibers, which facilitates slow digestion and stable blood-glucose levels. US 6190708 discloses a method of making a modified oat cereal suspension comprising maltose and maltodextrin units, intact β-glucans and proteins by the steps, which comprise: (i) providing an oat cereal substrate suspension; (ii) providing an enzyme composition comprising β-amylase and α-amylase, and (iii) treating said oat cereal substrate suspension (i) with said enzyme composition (ii), wherein said β-amylase and α-amylase enzymes are introduced simultaneously for accelerated enzymatic hydrolysis, reduction of viscosity and regulating sugar content formation of said modified oat cereal suspension, said method allowing use of lesser amounts of said enzymes than otherwise needed when said enzymes are used separately, and (iv) performing at least one finishing step on the enzyme modified oat cereal suspension of step (iii). US5631032 discloses a process for the preparation of cereal based foods having an increased level of glucose, comprising the steps of: a. selecting ground cereal grain (like oat), b. toasting said ground cereal grain before said ground cereal grain is dispersed in water, c. dispersing the toasted cereal grain in water to form a dispersion, d. subjecting said cereal dispersion to a hydrolysis process with at least one amylolytic enzyme prior to a boiling step in (e) below, thereby producing a hydrolyzed cereal grain having an increased level of glucose, e. subsequent to said hydrolysis, boiling said hydrolyzed cereal grain in water, f. drying said hydrolyzed cereal grain, and g. mixing said dried hydrolyzed cereal grain with at least one additive, wherein said additive is selected from sweeteners, aromas and food substances selected from the group comprising dairy products, infant formulas, vitamin complexes, mineral complexes, fruits, dehydrated fruit, juices and additional cereals.

US4859474 discloses a process for producing a sweetened cereal product comprising: (a) moistening a cereal grain by adding an aqueous solution to a cereal grain containing cellulose and starch in an amount sufficient to support conversion by enzymes of the cellulose and starch to fructose; (b) disrupting the moistened cereal produced in step (a) to an extent effective to promote the enzymatic conversion of the cellulose and starch to fructose; (c) adding to the disrupted, moistened cereal produced in step (b) enzymes effective to convert cellulose and starch to glucose and the glucose to fructose to produce a moistened cereal and enzyme mixture; (d) incubating said moistened cereal and enzyme mixture for a sufficient period of time and at a sufficient temperature to convert the cellulose and starch in said cereal to fructose while retaining a sufficient amount of starch for texture and formability in the resulting cereal product enriched in fructose; and (e) collecting said cereal product enriched in fructose. The process further includes a drying step after said step of collecting. Said enzymes are cellulase, alpha-amylase and amylo-glucosidase and said cellulase enzyme and alpha-amylase and amylo-glucosidase enzymes are added to the disrupted, moistened cereal before glucose isomerase.

WO0030457 discloses a process for preparing an oat-derived base comprising: preparing an oat based slurry having a solids content of between 5 and 45 % oat substrate by weight, said oat substrate containing beta-glucan and oat starches; heating the slurry to gelatinize at least a portion of the oat starches; adding an effective amount of at least an enzyme that has substantially no betaglucanase activity and digesting to the desired endpoint; and inactivating said enzyme to yield the liquid oat base and drying (claims, examples). Preferably, the product is prepared as a dry solid by removing the water from the enzyme digested oat-liquid to yield a dry solid. This may be accomplished, e. g., by spray drying drum drying or evaporation.

US4834988 discloses a method for preparing a cereal comprising: (a) heating an aqueous slurry containing at least one added starch hydrolyzing enzyme, at least one added glucose isomerizing enzyme and at least one grain at a pH and at a temperature at which said at least one starch hydrolyzing enzyme and at least one glucose isomerizing enzyme exhibit significant enzymatic activity and until at least 20% of the starch content of said grain has been hydrolyzed to glucose and at least a portion of said glucose converted to fructose; (b) combining at least a portion of said aqueous slurry with at least one cereal grain to form a cereal mixture wherein the weight ratio of said aqueous slurry to said cereal grain is 1% by weight to 45% by weight; (c) heating said cereal mixture; and (d) forming the cereal mixture into a final shape (claims, examples). Said cereal shapes are dried to a moisture content of 8 to 20% by weight. Said grain is selected from the group consisting of oats, wheat, rice, corn, barley, rye, flours thereof, and mixtures of the foregoing. Said starch-hydrolyzing enzymes are selected from the group consisting of alpha amylase, pullulanase, glucoamylase and mixtures thereof. The enzyme processed slurry also contains glucose, fructose and dextrins and when added to a cereal grain the cereal grain is sweetened to a degree by this slurry. The degree of sweetening depends on the amount of slurry added. Fructose has a high sweetening power so the slurry will have a greater sweetening effect on the cereal grain than would the use of sugar at the same level.

To make oatmeal more palatable, artificial sweeteners are typically added. Oatmeal can be sweetened using sucrose or sucrose substitutes, such as sucralose and acesulfame potassium. Sucralose can be anywhere from 300-1000 times as sweet as sucrose and other artificial sweeteners, such as acesulfame potassium, can be from 180-200 times sweeter than sucrose. These sweeteners are also useful to mask off-flavors inherently found in oats.

Artificial sweeteners, however, suffer from many disadvantages. One disadvantage of acesulfame potassium, for example, is that acesulfame potassium has its own slightly bitter aftertaste. As such, the addition of acesulfame potassium in order to mask off-flavors of oats can be counter-productive. To resolve this problem, it is commonly understood to blend other artificial sweeteners with acesulfame potassium in order to mask the aftertaste. In addition, the use of such sweeteners tends to make the product less attractive to health conscious consumers, since they are not perceived as being healthy for consumption.

It would therefore be desirable to provide a sweetener for which is perceived to be healthy for consumption. It would also be desirable to provide a sweetener that is a naturally derived product.

### SUMMARY

In accordance with the invention, a method for deriving a sweetener from oats is provided. The method includes generating an oat component and hydrolyzing the oat component with enzyme to form a modified oat flour. The modified out flour is dried to provide a sweetener composition, and the sweetener composition is granulated to form a sweetener. The oat component include milled oats. The enzyme may be glycoside hydrolase enzyme. The glycoside hydrolase enzyme may be selected from the group consisting of α-Amylase, β-Amylase, γ-Amylase, acid α-glucosidase and combinations thereof.

In accordance with other aspects (not part of the invention) a process for deriving a natural sweetener from oats is provided. The process includes providing a starting material including an oat component and adding water to the starting material to form a mixture. The mixture can be pre-processed. If necessary, the mixture is hydrolyzed with an enzyme to form an oat composition. The oat composition is dried to form a sweetener. The oat component may include whole oat groats, oat flour, rolled oats, partially milled oats, oatmeal, or combinations thereof. Pre-processing may include cooking the mixture. The mixture may be hydrolyzed using a hydrolase enzyme that is able to catalyze the hydrolysis of the alpha-glucosidic bonds in starch. The hydrolase enzyme may be a glucosidase. The glucosidase may be selected from the group consisting of alpha-amylase, beta-amylase or combinations thereof.

In accordance with still further aspects (not part of the invention) a sweetener that is naturally derived from oats is provided. In certain aspects, an oat component is enzymatically modified to result in an oat component that is self-sweetened.

Still further aspects (not part of the invention) include sweeteners that are derived from oats that are particulate based. The sweeteners may also be granulated or powder based, depending on the use of the particulate.

In accordance with other aspects (not part of the invention), self-sweetened food products are provided. Self-sweetened food products can be obtained by hydrolyzing a grain component with an enzyme to form a hydrolyzed grain composition. The hydrolyzed grain composition is allowed to achieve a desired degree of hydrolysis. Once the desired degree of hydrolysis has been achieved, the hydrolyzed grain composition can be heated. Heating the hydrolyzed grain composition will inhibit certain enzyme activity. After heating, the hydrolyzed grain composition can be dried out in order to form a self-sweetened food product. In some aspects the self-sweetened food product is oatmeal.

### DETAILED DESCRIPTION

The method of deriving a sweetener from oats according to the invention comprises: -providing an oat component;
- milling the oat component to a particle size selected from the group consisting of 6.35µm, 125 µm, and 420 µm, and combinations thereof;
- mixing the oat component with an amount of liquid, such as water, to form a mixture, wherein the mixture comprises 5-40, and preferably 18-25, wt% solids on a dry matter basis;
- cooking the mixture at a temperature maintained below 71 °C (160°F); -hydrolyzing the mixture with enzyme to form a modified oat flour, wherein the hydrolyzing is carried out with 0.01% to 1% by weight of the enzyme to form the modified oat flour;
- drying the modified oat flour to provide a sweetener composition; and
- processing the sweetener composition to form a sweetener, wherein the processing includes granulation, and wherein the sweetener composition has a Dextrose Equivalent value of 10-90.

A natural sweetener derived from oat is provided. Oat soluble fibers, such as beta glucan, have been found to contribute to the reduction of cholesterol, among other effects. As such, it is advantageous to utilize a cereal grain that also includes beta glucan. Moreover, oats are preferably gelatinized prior to use. Gelatinization is typically a cooking process in which the hard kernel coating is broken and the starch granules are ruptured and released.

Natural sweeteners can be used as sweetening agents for grain-based food products. For example, grain-based food products include cereal grain such as oat, wheat, corn (maize), rice, barley, millet, sorghum (milo), rye, triticale, teff, wild rice, spelt, buckwheat, amaranth, quinoa, kañiwa, cockscomb, or combinations thereof (e.g., multi-grain). Food products such as cereal grain-based or non-cereal grain-based food product which are provided in instant, non-instant, or semi-instant forms and include the natural sweeteners are also contemplated as being within the scope of the invention. For example, the grain-based food product may include instant oatmeal. The natural sweeteners also can be used in other types of food products and also beverages.

The natural sweetener is sufficiently sweet to allow it to be used as a supplement or replacement for sweeteners, such as sucrose or sucrose substitutes, which are conventionally added to grain-based food products.

The sweetener is derived from a natural starting material. In certain aspects, the starting material includes oat or its derivative ("oat component"). Other types of cereal grain may also be used. The oat component can be provided in various forms, including whole oat groats, oat flour, rolled oats, partially milled oats, oatmeal, or combinations thereof.

The oat component may be subjected to pre-processing to form a starch-containing mixture. It is also contemplated that certain oat components may not require any degree of pre-processing to form the starch-containing mixture. The pre-processing procedure may differ depending on the form in which the oat component is provided. For example, whole oat groats may be crushed or ground between rollers to produce oat flakes. The crushed oat grains or oat flakes may be further subjected to wet or dry milling to produce oat flour. The oat component also may be milled to fine granulation to facilitate water, heat and enzyme penetration in subsequent processing steps. In certain aspects, the oat component is provided in wet form rather than dry form. The wet form is sometimes preferred because in some instances, additional drying may cause the development of rancidity. The wet form is preferred in some instances because it accelerates conversion of starch to sugar time through better combining of the substrate and the enzyme.

The oat component is milled to particle sizes of 6.35 µm, 125 µm and/or 420 µm. After milling, separation techniques, such as screening, can be used to isolate over-sized particles for removal. Other separation techniques known to those of skill in the art may also be employed, including, but not limited to, filtration techniques.

The oat component is mixed with an amount of liquid, such as water, to form a mixture. The mixture comprises at least about 5-40, including 18-25, weight % [wt%] solid on a dry matter basis, depending on the hydration technique. The level of solids within the mixture can be adjusted to control the sweetness level of the natural sweetener. For example, increasing the level of solids increases the starch content of the mixture, which in turn increases the sweetness of the natural sweetener.

The mixture can be processed. It will be understood by those of ordinary skill in the art that processing is a step that may or may not be necessary in every instance depending on the chosen application for the naturally derived sweetener. For example, the processing may include cooking the mixture. Cooking processes involve subjecting the mixture to high temperatures, which preferably effects at least partial gelatinization of the starch contained in the mixture. In certain aspects, substantially all of the starch in the mixture can be gelatinized in the cooking step. The degree of gelatinization can vary depending on the use of the final product. High temperatures during cooking also serve to inactivate enzymes, such as lipase and peroxidase, inherent in oats. These enzymes could potentially favorably affect the taste of the natural sweetener by promoting lipid oxidation.

Various conventional methods can be used to cook the mixture. Such methods include, for example, direct and indirect steam heating, through steam injection in a jet cooker or plate heat exchanger, scrape surface heat exchanger, cooking in a pressure chamber, such as an autoclave or rotary cooker, or an extruder. Other cooking techniques may also be useful as would be appreciated by those of ordinary skill in the art. The cooking temperature is maintained below 160-300°F, for example, below 71°C (160°F) to minimize off-flavors that may be produced from reactions of non-starch components, such as proteins or fats, in the oat component. The level of solids in the mixture may be adjusted after cooking, for example by adding more liquid.

Thereafter, if desired, the mixture is subjected to an enzymatic hydrolysis to produce a hydrolyzed oat composition. The starches and polysaccharides of the mixture are converted into simpler sugars by the action of enzymes. In general, any hydrolase enzyme able to catalyze the hydrolysis of the α-glucosidic bonds in starch can be used. Useful enzymes include glucosidases, including, for example, α-amylase and β-amylase. It is contemplated that many enzymes could be utilized in provided that there is minimal or no beta glucanese side activity. Other enzymes are also contemplated for use as would be appreciated by those having ordinary skill in the art. α-amylase and β-amylase convert starch to maltodextrin and maltose, respectively, while glucosidase produces glucose. Isomerase enzymes, for catalyzing the interconversion of isomers, may also be useful. An example is glucose isomerase, which catalyzes the conversion of glucose into fructose. Suitable commercially available enzymes include, for example, from Kerry Bioscience, Novo-Nordisk and Genentech.

One or more of enzymes may be used for catalyzing the hydrolysis of the starch contained in the mixture. By using a combination of enzymes, various ratios of different monosaccharides or disaccharides can be produced. The enzymes can be introduced to the mixture either simultaneously or in sequence, according to the desired saccharide profile of the natural sweetener, which in turn affects its sweetness and taste. As an example, it is contemplated that in some instances, the enzyme will be placed in solution, followed by the addition of ½ of the oat concentration. Once the viscosity of the solution decreases, the other ½ of the oat concentration can be added.

In certain aspects, hydrolysis is carried out in a mixing kettle, mixer or an extruder. Various types of conventional mixers or extruders can be used as would be appreciated by those of ordinary skill in the art. For example, mixers and extruders made by Clextral, Werner-Pflieder, Wenger, Cherry-Burrell can be used. The mixture is fed to the mixer along with the selected enzyme(s). Free enzymes are introduced directly into the mixture. In other aspects, the mixture is introduced to a vessel or reactor containing immobilized enzymes. Unlike free enzymes, which are typically not reused owing to problems and high costs associated with recovery, immobilized enzymes can be reused and recovered. Enzymatic performance is highly sensitive to process conditions such as temperature and pH. For example, temperature affects catalytic activity while pH can influence the product spectra. Reaction time determines the degree of degradation and thus also affects the product spectra. For example, the hydrolysis step may be conducted anywhere from 5 to 120 minutes.

The degree of hydrolysis is related to the sweetness level of the natural sweetener. In general, sweetness level increases with the amount of starch hydrolyzed. The enzyme level utilized for the degree of hydrolysis is 0.01% to 1% by weight. After the starch is sufficiently hydrolyzed, the hydrolysis process is terminated. The resultant hydrolyzed oat composition can be heated to about 150-300° F to deactivate the enzymes, thus stopping their action. Other methods including, for example, centrifugation, chromatographic techniques, or separation of the mixture from the immobilized enzymes, may also be useful. Alternatively, the same effect can be achieved by cooling the hydrolyzed oat composition. In certain aspects, the resultant hydrolyzed oat composition has a Dextrose Equivalent (DE) value of 10-90.

The hydrolyzed oat composition is filtered to separate non-soluble starches or other components for removal. Filtration can be accomplished by various conventional techniques as would be appreciated by those having ordinary skill in the art. Other methods for removing insoluble components, including centrifuging or decanting, may also be useful. Depending on the use of the natural sweetener, the hydrolyzed oat composition may also be sterilized, for example, by subjecting it to an ultra high temperature treatment at about 270° F for about 30 minutes.

Once hydrolyzed, the hydrolyzed oat composition is dried to produce a natural sweetener. Various conventional techniques can be used for drying as would be appreciated by those having ordinary skill in the art. Such techniques include, for example, roller drying, freeze drying, lyophilization, spray-drying, drum drying, refractance drying, flash drying, fluidized bed drying, and the like.

The dried natural sweetener can be processed for use. In certain aspects, the dried natural sweetener can by used for self-sweetening food products. In addition, the dried natural sweetener can be added to other food products. For example, the sweetener can be further processed to be granulated and/or powdered. The natural sweetener is useful for replacing conventional sweeteners, such as sucrose or sucrose substitutes, in grain-based food products. Use of the natural sweetener may make such products more attractive to health-conscious consumers.

It is contemplated that the naturally derived self-sweetened compositions can be used in a number of food products and beverages. For example, it is contemplated that the natural sweeteners can be used in oatmeal and other ready-to-eat cereals, beverages and puddings, among other uses as would be appreciated by those of ordinary skill in the art.

The foregoing embodiments are to be considered in all respects illustrative rather than limiting the invention described herein. The invention has been described with reference to certain preferred embodiments. Obviously, modifications and alterations will occur to others upon reading and understanding the preceding detailed description. It is intended that the invention be construed as including all such modifications and alterations insofar as they come within the scope of the appended claims or the equivalents thereof.

## Claims

1. A method of deriving a sweetener from oats comprising:
providing an oat component;
milling the oat component to a particle size selected from the group consisting of 6.35µm, 125µm, and 420µm, and combinations thereof;
mixing the oat component with an amount of liquid, such as water, to form a mixture, wherein the mixture comprises 5-40, and preferably 18-25, wt% solids on a dry matter basis;
cooking the mixture at a temperature maintained below 71°C (160°F);
hydrolyzing the mixture with enzyme to form a modified oat flour, wherein the hydrolyzing is carried out with 0.01 % to 1% by weight of the enzyme to form the modified oat flour;
drying the modified oat flour to provide a sweetener composition; and
processing the sweetener composition to form a sweetener, wherein the processing includes granulation, and wherein the sweetener composition has a Dextrose Equivalent value of 10-90.

2. The method of claim 1 wherein the oat component is selected from the group consisting of whole oat groats, oat flour, rolled oats, partially milled oats, oatmeal, and combinations thereof.

3. The method of claim 1 wherein the enzyme is glycoside hydrolase enzyme.

4. The method of claim 3 wherein the glycoside hydrolase enzyme is selected from the group consisting of α-Amylase, β-Amylase. γ-Amylase, acid α-glucosidase and combinations thereof.

5. The method of claim 1 wherein the processing of the sweetener composition includes powderization.

6. The method according to any of the preceding claims, further comprising one or more of the following steps;
heating the modified oat flour to (66-149°C) 150°-300°F to deactivate the at least one enzyme;
optionally followed by separating over-sized particles for removal;
sterilizing the hydrolyzed oat composition.

## Patentansprüche

1. Verfahren zur Ableitung eines Süßstoffs von Hafer, das Folgendes umfasst:
Bereitstellen einer Haferkomponente;
Mahlen der Haferkomponente zu einer Teilchengröße, die aus der Gruppe bestehend aus 6,35 µm, 125 µm und 420 µm und Kombinationen davon ausgewählt ist;
Mischen der Haferkomponente mit einer Menge einer Flüssigkeit, wie Wasser, um ein Gemisch zu bilden, wobei das Gemisch 5-40 und vorzugsweise 18-25 Gew.-% Feststoffe auf einer Trockenmassebasis umfasst;
Kochen des Gemischs bei einer Temperatur, die unter 71 °C (160 °F) gehalten wird;
Hydrolysieren des Gemischs mit Enzym, um ein modifiziertes Hafermehl zu bilden, wobei das Hydrolysieren mit 0,01 Gew.-% bis 1 Gew.-% des Enzyms durchgeführt wird, um das modifizierte Hafermehl zu bilden;
Trocknen des modifizierten Hafermehls, um eine Süßstoffzusammensetzung bereitzustellen; und
Verarbeiten der Süßstoffzusammensetzung, um einen Süßstoff zu bilden, wobei das Verarbeiten eine Granulierung beinhaltet und wobei die Süßstoffzusammensetzung einen Dextrose-Äquivalent-Wert von 10-90 aufweist.

2. Verfahren nach Anspruch 1, wobei die Haferkomponente aus der Gruppe bestehend aus Vollkornhafergrütze, Hafermehl, Haferflocken, teilweise gemahlenem Hafer, Haferbrei und Kombinationen davon ausgewählt ist.

3. Verfahren nach Anspruch 1, wobei das Enzym Glykosidhydrolase-Enzym ist.

4. Verfahren nach Anspruch 3, wobei das Glykosidhydrolase-Enzym aus der Gruppe bestehend aus α-Amylase, β-Amylase, γ-Amylase, saurer α-Glucosidase und Kombinationen davon ausgewählt ist.

5. Verfahren nach Anspruch 1, wobei die Verarbeitung der Süßstoffzusammensetzung eine Pulverisierung beinhaltet.

6. Verfahren nach einem der vorhergehenden Ansprüche, das weiterhin einen oder mehrere der folgenden Schritte umfasst:
Erhitzen des modifizierten Hafermehls auf (66-149 °C) 150 °F - 300 °F, um das mindestens eine Enzym zu deaktivieren;
gegebenenfalls gefolgt von Trennen von übergroßen Teilchen zur Entfernung;
Sterilisieren der hydrolysierten Haferzusammensetzung.

## Revendications

1. Méthode pour préparer un édulcorant dérivé de l'avoine consistant à :
fournir un composant de l'avoine :
transformer le composant de l'avoine en une taille de particule choisie dans le groupe de tailles de 6,35 µm, 125 µm et 420 µm et de combinaisons de ceux-ci ;
mélanger le composant de l'avoine à une certaine quantité de liquide, comme de l'eau, pour former un mélange, dans lequel le mélange comprend 5-40 %, et de préférence 18-25 %, en poids de solides sur une matière sèche ;
faire cuire le mélange à une température inférieure à 71 °C (160 °F) ;
hydrolyser le mélange avec de l'enzyme pour former de la farine d'avoine modifiée, dans lequel l'hydrolyse est réalisée avec 0,01 % à 1 % en poids de l'enzyme pour former la farine d'avoine modifiée ;
sécher la farine d'avoine modifiée pour obtenir une composition d'édulcorant ; et
traiter la composition de l'édulcorant pour former un édulcorant, dans lequel le procédé comprend la granulation, et dans lequel la composition de l'édulcorant a une valeur d'équivalent dextrose de 10-90.

2. Méthode selon la revendication 1, dans lequel le composant de l'avoine est choisi dans le groupe constitué de gruaux d'avoine entiers, de farine d'avoine, de flocons d'avoine, d'avoine partiellement moulue, de gruau et de combinaisons de ceux-ci.

3. Méthode selon la revendication 1, dans lequel l'enzyme est de l'enzyme hydrolase glycoside.

4. Méthode selon la revendication 3, dans lequel l'enzyme hydrolase glycoside est choisi dans le groupe constitué de : α-Amylase, βAmylase, γ-Amylase, d'acide α-glucosidase et de combinaisons de ceux-ci.

5. Méthode selon la revendication 1, dans lequel le traitement de la composition de l'édulcorant comprend la pulvérisation.

6. Méthode selon l'une quelconque des revendications précédentes comprenant, en outre, une ou plusieurs étapes suivantes consistant à :
chauffer la farine d'avoine modifiée à 66-149 °C (150°-300°F) pour désactiver au moins un enzyme ;
séparer ensuite, sur une base optionnelle, des particules surdimensionnées pour les supprimer ;
stériliser la composition de l'avoine hydrolysée.
